# EUROPEAN PATENT APPLICATION

(11) **EP 4 834 710 A1**
(43) Date of publication of application: **04.11.2026**
(21) Application number: 26174041.9
(22) Date of filing: 22.04.2026
(51) Int. Cl.: B62D 1/04, A63F 13/20, B60K 35/60, G06F 3/01, G09B 9/02

(54) **STEERING WHEEL WITH DUAL ACTING ROTARY ACTUATOR AND ASSOCIATED METHOD**

(30) Priority: 30.04.2025 ES 202530362
(71) Applicant: Seat, S.A., 08760 Martorell - Barcelona (ES)
(72) Inventor: Rodriguez Bosch, Ruben, Martorell (ES); Solanes Valverde, Josep Maria, Martorell (ES); Fernandez Abad, Jose Luis, Martorell (ES); Quintana Jover, Joan, Martorell (ES)
(74) Representative: Pons IP

(57) **Abstract**

The present invention relates to a steering wheel (1) comprising an integrated rotary actuator (2). The rotary actuator (2) can be actuated, for the convenience of the user, with the hand located on the rim of the steering wheel (1) using both the thumb from the front and the index finger from the rear of the steering wheel (1). The steering wheel (1) comprises at least one integrated sensor (3, 4) for determining the actuation point of the rotary actuator (2) and a processing system (5) for determining an operating logic of the rotary actuator (2) based on the determined actuation point, based on the perspective of the user.

## Description

### OBJECT OF THE INVENTION

The present invention relates to the field of motor vehicles or to the field of motor vehicle simulators.

Specifically, the invention focuses on a steering wheel and a computer-implemented method that makes use of the steering wheel. Such steering wheel comprises a rotary actuator and has two different operating logics depending on the actuation point of such actuator.

### BACKGROUND OF THE INVENTION

Steering wheels are devices that have the function of controlling direction in vehicles. Steering wheels are used in all types of vehicles, from cars to light and heavy trucks. Steering wheels are also used in simulators of these vehicles. The steering wheel is part of the steering system of the vehicle, or the simulated vehicle, which is manipulated by the driver, generating actions that are responded to by the rest of the steering system.

Conventional steering wheels use actuators that are integrated into the face or main part of the steering wheel, i.e., the face or part facing the driver. The actuators can be of different types, such as linear, rotary, or capacitive. In relation to rotary actuators, they are commonly used to increase or decrease some parameter in the vehicle, for example, the audio volume. Today, there are steering wheels, for example, racing car steering wheels, which comprise floating rotary actuators, which can be operated from both the front and rear of the steering wheel.

Although this type of actuator can be operated from both the front and rear of the steering wheel, its operation does not correspond to the logic of activation by the user. For example, if the user rotates the actuator with a thumb up from the front, such action will increase the audio volume in the vehicle. However, if the user wishes to operate the actuator from the rear of the steering wheel using the fingers located in the steering wheel area, the user will need to rotate the actuator downwards to increase the volume, which would not be obvious to the user.

### DESCRIPTION OF THE INVENTION

The present invention refers, according to a first aspect, to a steering wheel that could be integrated into a vehicle, a simulator or a controller, among others.

The steering wheel of the invention comprises:
- a rotary actuator arranged on such steering wheel to be actuated, at least from a front part of the steering wheel and from a rear part of the steering wheel;
- at least one sensor configured to determine an actuation point of the rotary actuator;
- a processing system connected to the at least one sensor and configured to receive measurement data from such at least one sensor.

Unlike the steering wheels known in the state of the art, in the present invention, characteristically, the processing system is additionally configured to determine an operating logic of the rotary actuator based on the actuation point, such that:
- if the actuation point is determined from the front of the steering wheel, a first logic applies, consisting of performing a first action when the rotary actuator is rotated in a first direction of rotation and performing a second action when the rotary actuator is rotated in a second direction of rotation, contrary to the first direction of rotation; and,
- if the actuation point is determined from the rear of the steering wheel, a second logic applies, which consists of performing the second action when the rotary actuator is rotated in the first direction of rotation and performing the first action when the rotary actuator is rotated in the second direction of rotation.

The rotary actuator concept may refer to a scrolling wheel or disc that can be rotated about an axis and can be integrated into a steering wheel, made of a material such as hard plastic or hard rubber or any other material deemed appropriate.

The steering wheel comprises a peripheral rim and at least one spoke communicating such peripheral rim with the center of the steering wheel. The rotary actuator can be arranged in such at least one spoke, proximate to the peripheral rim, for example at about 100 mm, facilitating its actuation without the need for the driver to take his hands off the steering wheel, since for convenience the user can operate the rotary actuator with the hand located on the steering wheel rim using both the thumb from the front and the index finger from the rear of the steering wheel. Additionally, the steering wheel can comprise a rotary actuator in both a left spoke and a right spoke, which can be operated by the user with both the fingers of the left hand and the fingers of the right hand. The present invention arises from the need for a steering wheel with an actuator whose operation is based on its actuation area, based on the actuation logic from the perspective of the user for greater user comfort.

By actuation logic or operating logic is meant in the present invention the set of rules and processes that determine how a system or device operates, from the input of data to the output of results. In other words, it describes how something "works" or "thinks" to achieve a specific goal. The present invention proposes two operating modes or actuation logics opposite to each other, depending on whether the actuation takes place from the front or rear of the steering wheel, as will be described in more detail below.

The processing system, which is a control unit comprising a program with instructions that, when executed, control a parameter based on the rotation of the rotary actuator, such that the first action preferably corresponds to an increase in the parameter to be controlled and the second action corresponds to a decrease in the parameter to be controlled. Such parameter may include, but is not limited to, the audio volume in a vehicle.

Optionally, the rotary actuator is configured to be actuated from any point on its perimeter and the processing system is configured to determine whether the actuation point is determined from the front of the steering wheel or from the rear of the steering wheel. In this way, a driver can actuate the rotary actuator by rotating it from any point with a logic according to his perception, preventing him from losing concentration while driving.

The rotary actuator can be arranged in two different ways on the steering wheel. According to a first variant, the rotary actuator can be arranged such that its axis of rotation is substantially parallel to a horizontal axis, the steering wheel being arranged in an unrotated position, i.e., with the vehicle moving forward in a straight line. Alternatively, according to a second variant, the rotary actuator may be arranged such that its rotational axis is substantially parallel to a vertical axis, the steering wheel being arranged in an unrotated position. In this way, the location of the actuator on the steering wheel can be adapted depending on the type of application for which it is intended.

The processing system can also be configured to give instructions to a display to display previously determined operating logic. When the rotary actuator is arranged with its rotation axis parallel to a horizontal axis, the first action corresponds to an upward displacement of the information displayed on the display and the second action corresponds to a downward displacement of such information. On the other hand, when the rotary actuator is arranged with its rotation axis parallel to a vertical axis, the first action corresponds to a rightward displacement of the information displayed on the display and the second action corresponds to a leftward shift of such information.

In the present invention a sensor is understood to be any device which is capable of determining a change in the environment, according to the present invention an actuation point of the rotary actuator, and transmitting it for reading or processing, according to the present invention for the processing unit.

According to a variant of the present invention, the at least one sensor on the steering wheel is a force sensor, specifically a capacitive sensor. Such capacitive sensor is configured to detect changes in capacitance due to deformation under the applied force. Thus, this type of sensors makes it possible to determine whether the main component of the force applied by the driver is made from the front area of the rotary actuator to the rear area of the same, or conversely, from the rear area of the rotary actuator to its front area.

According to an alternative variant, the at least one sensor is a displacement sensor, allowing to discriminate whether the displacement of the rotary actuator is towards the front area of the steering wheel or towards the rear area of the steering wheel.

Preferably, the rotary actuator has a large dimension, for example larger than 40 mm in diameter, preferably 50 mm in diameter, making it easy for the user to access it using fingers from both the front and rear of the steering wheel without the need to take their hand off the steering wheel. A rotary actuator of such dimensions protrudes over the surfaces that make up the spoke of the steering wheel, making it easy for the user to engage it and manipulate it.

Additionally, and according to a second aspect, the invention relates to a computer-implemented method making use of the described steering wheel and comprising the following steps:
- receiving measurement data from the at least one sensor corresponding to an actuation point of the rotary actuator;
- determining whether the actuation point of the rotary actuator is from the front of the steering wheel or from the rear of the steering wheel;
- determining an operating logic of the rotary actuator based on the determined actuation point, such that:
   o if the actuation point is determined from the front of the steering wheel, apply a first logic consisting of performing a first action when the rotary actuator is rotated in a first direction of rotation and performing a second action when the rotary actuator is rotated in a second direction of rotation, contrary to the first direction of rotation; and
   o if the actuation point is determined from the rear of the steering wheel, applying a second logic which consists of performing the second action when the rotary actuator is rotated in the first direction of rotation and performing the first action when the rotary actuator is rotated in the second direction of rotation.

Optionally, the method includes the step of sending instructions to the display to scroll the information displayed on such display based on the first or second logic applied and the first or second determined action.

### DESCRIPTION OF THE DRAWINGS

In order to complement the description provided and to aid in a better understanding of the characteristics of the invention, according to a preferred practical embodiment of the same, a set of drawings is included as an integral part of said description, wherein for illustrative and non-limiting purposes, the following has been represented:
Figure 1: Shows a portion of a steering wheel as viewed from its front with a rotary actuator, according to the present invention.
Figure 2: Shows a portion of a steering wheel as viewed from its rear with a rotary actuator, according to the present invention.
Figure 3: Shows the rotary actuator with the two operating logics, according to the present invention.
Figure 4: Shows a scheme with the different components of the invention required to apply each operating logic of the rotary actuator based on the actuation point thereof.

### PREFERRED EMBODIMENT OF THE INVENTION

The present invention relates to a steering wheel (1) that may, but is not limited to, be integrated into a vehicle and which comprises a rotary actuator (2).

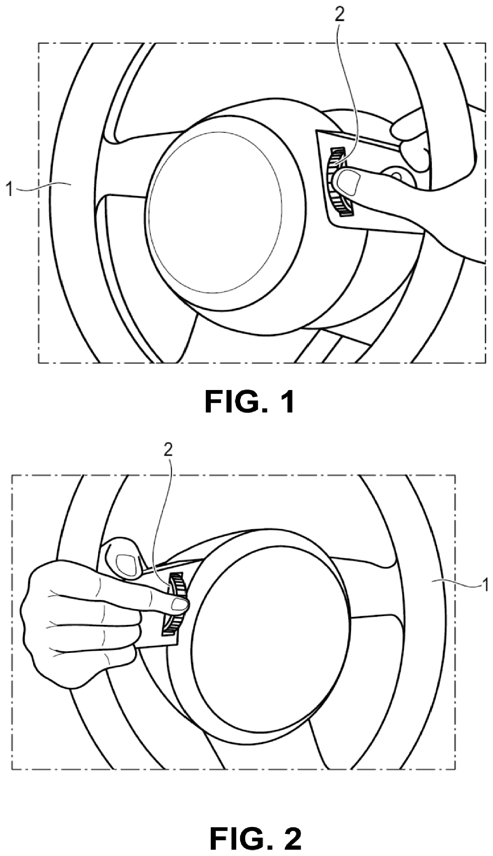

Figures 1 and 2 show a preferred embodiment of the invention in which a steering wheel (1) comprises a rotary actuator (2) of 50 mm diameter, positioned approximately 100 mm from the peripheral rim of the steering wheel. As shown in Figure 1, the rotary actuator (2) is accessible from the front of the steering wheel (1), protruding from the leading surface of the steering wheel spoke (1). Likewise, as shown in Figure 2, the rotary actuator (2) is accessible from the rear of the steering wheel (1), protruding from the rear surface of the steering wheel spoke (1). Such rotary actuator (2) can be operated without removing one's hand from the steering wheel rim (1), for the convenience of the user, using both the thumb from the front and the index finger from the rear of the steering wheel (1).

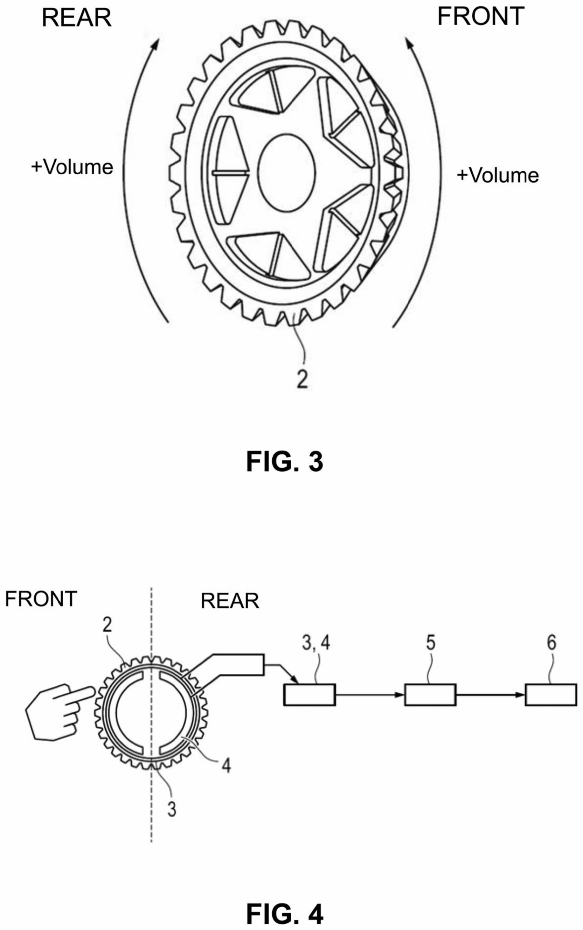

Figure 3 shows two different operating logics of the rotary actuator (2) for controlling a parameter, such as for example the audio volume in a vehicle. The Figure shows two operating logics opposite to each other, where a rotation of the rotary actuator (2) in opposite directions of rotation generates the same control action on the parameter to be controlled, which, following the example represented, is equivalent to increasing the audio volume in the vehicle.

Thus, in the right-hand area of Figure 3, the first operating logic of the rotary actuator (2) is represented, consisting of increasing the audio volume when the rotary actuator (2) is rotated in a first direction of rotation (represented in a counterclockwise direction) and decreasing it when the rotary actuator (2) is rotated in a second direction of rotation, opposite to the first direction of rotation, (not represented in the Figure but equivalent to a clockwise one). Such first operating logic of the rotary actuator (2) is activated when the processing system (5) determines an actuation point from the front of the steering wheel (1).

Conversely, and represented in the left area of Figure 3, the second operating logic of the rotary actuator (2) consists of increasing the audio volume when the rotary actuator (2) is rotated in the second direction of rotation (represented in a clockwise direction) and decreasing it when the rotary actuator (2) is rotated in the first direction of rotation (not represented in the Figure but equivalent to counterclockwise). Such second operating logic of the rotary actuator (2) is activated when the processing system (5) determines an actuation point from the rear of the steering wheel (1).

Thus, as represented in Figure 3, and by arranging the rotary actuator (2) with a rotation according to a horizontal axis, it is achieved that the upward movement of the user's finger on the rotary actuator (2) is equivalent to an increase in the parameter to be controlled, regardless of whether the action on the rotary actuator (2) is from the front of the steering wheel (1) or from the rear of the steering wheel (1). Conversely, the downward movement of the user's finger on the rotary actuator (2) is achieved to be equivalent to a decrease in the parameter to be controlled, regardless of whether the action on the rotary actuator (2) is from the front of the steering wheel (1) or from the rear of the steering wheel (1).

Although it has not been represented in the Figures, it is understood that such operating logic can be extrapolated to a rotary actuator (2) with a rotation according to a vertical axis, where it is achieved that the right movement of the user's finger on the rotary actuator (2) is equivalent to, for example, a displacement to the right between different icons represented on the display, regardless of whether the action on the rotary actuator (2) is from the front of the steering wheel (1) or from the rear of the steering wheel (1). Conversely, the leftward movement of the user's finger on the rotary actuator (2) is achieved to equate to a leftward displacement between different icons represented on the display, regardless of whether the action on the rotary actuator (2) is from the front of the steering wheel (1) or from the rear of the steering wheel (1).

Figure 4 shows the rotary actuator (2) with two integrated force sensors (3, 4) to determine an actuation point thereof. The sensors (3, 4) are capacitive sensors that detect pressure exerted on them. Thus, a first sensor (3) is arranged stationary in the region of the rotary actuator (2) closest to the front of the steering wheel (1). A second sensor (4) is arranged stationary in the area of the rotary actuator (2) closest to the rear of the steering wheel (1).

Such sensors (3, 4) are connected to a processing system (5), configured for the receipt of measurement data from the sensors (3, 4) corresponding to the actuation point of the rotary actuator (2). Thus, if it is the first sensor (3) that determines the actuation, the processing system (5) applies the first described operating logic. Conversely, if it is the second sensor (4) that determines the actuation, the processing system (5) applies the second described operating logic.

Additionally, the processing system (5) can be operatively connected to a display (6), being configured to send instructions to such display (6) to display the previously determined operating logic. Thus, the parameter modified via the first logic or second operating logic may be displayed on the display (6). By way of example, in case the modified parameter is the audio volume system, a bar whose level increases or decreases according to the action performed and the rotation logic applied can be represented on the display (6). According to another example, in case the modified parameter is the navigation through an information carousel, the movement through such carousel to the left and right, or up and down, can be represented on the display (6), according to the action taken and the rotation logic applied.

## Claims

1. A steering wheel (1) comprising:
- a rotary actuator (2) arranged on such steering wheel (1) to be actuated at least from a front of the steering wheel (1) and from a rear of the steering wheel (1);
- at least one sensor (3, 4) configured to determine an actuation point of the rotary actuator (2);
- a processing system (5) connected to the at least one sensor (3, 4) and configured to receive measurement data from such at least one sensor (3, 4);
**characterized in that** the processing system (5) is additionally configured to determine an operating logic of the rotary actuator (2) based on the actuation point, such that:
• if the actuation point is determined from the front of the steering wheel (1), a first logic applies, consisting of performing a first action when the rotary actuator (2) is rotated in a first direction of rotation and performing a second action when the rotary actuator (2) is rotated in a second direction of rotation, contrary to the first direction of rotation; and,
• if the actuation point is determined from the rear of the steering wheel (1), a second logic applies, which consists in performing the second action when the rotary actuator (2) is rotated in the first direction of rotation and performing the first action when the rotary actuator (2) is rotated in the second direction of rotation.

2. The steering wheel (1) of claim 1, wherein the processing system (5) is additionally configured to control a parameter based on the rotation of the rotary actuator (2), such that the first action corresponds to an increase in the parameter to be controlled and the second action corresponds to a decrease in the parameter to be controlled.

3. The steering wheel (1) according to any of the preceding claims, wherein the rotary actuator (2) is configured to be actuated from any point on its perimeter and wherein the processing system (5) is configured to determine whether the actuation point is determined from the front of the steering wheel (1) or from the rear of the steering wheel (1).

4. The steering wheel (1) according to any of the preceding claims, wherein the rotary actuator (2) is arranged such that its axis of rotation is substantially parallel to a horizontal axis, the steering wheel being arranged in an unrotated position.

5. The steering wheel (1) according to any of claims 1 to 3, wherein the rotary actuator (2) is arranged such that its rotational axis is substantially parallel to a vertical axis, the steering wheel being arranged in an unrotated position.

6. The steering wheel (1) according to any of the preceding claims, wherein the processing system (5) is configured to give instructions to a display (6) to display previously determined operating logic.

7. The steering wheel (1) of claim 6, when it depends on claim 4, wherein the first action corresponds to an upward scrolling of the information displayed on the display (6) and the second action corresponds to a scrolling down of such information.

8. The steering wheel (1) of claim 6, when it depends on claim 5, wherein the first action corresponds to a scrolling to the right of the information displayed on the display (6) and the second action corresponds to a scrolling to the left of such information.

9. The steering wheel (1) according to any of the preceding claims, wherein the at least one sensor (3, 4) is a force sensor.

10. The steering wheel (1) of claim 9, wherein the force sensor is a capacitive sensor.

11. The steering wheel (1) according to any of the preceding claims, wherein the rotary actuator (2) measures at least 40 mm in diameter.

12. The steering wheel (1) according to any of the preceding claims, comprising a peripheral rim and at least one spoke communicating such peripheral rim with the center of the steering wheel (1), wherein the rotary actuator (2) is arranged at such at least one spoke.

13. Computer-implemented method using the steering wheel (1) according to any of claims 1 to 12, comprising the steps of:
- receiving measurement data from the at least one sensor (3, 4) corresponding to an actuation point of the rotary actuator (2);
- determining whether the actuation point of the rotary actuator (2) is from the front of the steering wheel (1) or from the rear of the steering wheel (1);
- determining an operating logic of the rotary actuator (2) based on the determined actuation point, such that:
o if the actuation point is determined from the front of the steering wheel (1), applying a first logic consisting of performing a first action when the rotary actuator (2) is rotated in a first direction of rotation and performing a second action when the rotary actuator (2) is rotated in a second direction of rotation, contrary to the first direction of rotation; and
o if the actuation point is determined from the rear of the steering wheel (1), applying a second logic consisting in performing the second action when the rotary actuator (2) is rotated in the first direction of rotation and performing the first action when the rotary actuator (2) is rotated in the second direction of rotation.

14. Computer-implemented method according to claim 13, comprising an additional step of sending instructions to the display (6) to move the information displayed on such display (6) based on the first or second logic applied and the first or second determined action.
